# EUROPEAN PATENT APPLICATION

(11) **EP 2 944 849 A1**
(43) Date of publication of application: **18.11.2015**
(21) Application number: 15167535.2
(22) Date of filing: 13.05.2015
(51) Int. Cl.: F16K 1/22, F16K 3/12

(54) **IMPROVED VALVE**

(30) Priority: 13.05.2014 NL 2012805
(71) Applicant: H.A. Prince Beheer Bergen op Zoom B.V., 4691 RX Tholen (NL)
(72) Inventor: Heijboer, Wilbert, 4697 GV Tholen (NL)
(74) Representative: D'Halleweyn, Nele Veerle Trees Gertrudis

(57) **Abstract**

Valve comprising a valve housing with an inlet (4) and an outlet (5), and a closing body (1) which is reciprocally movable in the valve housing between a closing position and an open position; wherein the closing body has a first and a second surface (14, 15) intended for the purpose of sealing respectively the inlet and the outlet in the closing position, wherein the closing body has a first end (11) and a second end (12) and comprises between the first end and the second end a conical or pyramidal peripheral wall (13), the circumference of which decreases in the direction of the second end (12), wherein the first and the second surface (14, 15) are located on the conical or pyramidal peripheral wall (13).

## Description

The present invention relates to a valve, also known under the name slide valve, preferably with a valve housing manufactured from plastic, comprising a valve housing with an inlet and an outlet and a closing body which is reciprocally movable in the valve housing between a closing position and an open position.

Such valves are generally known and are used to fully interrupt or allow passage of a fluid flow, particularly a gas flow.

The present invention has for its object to provide a more compact pressure-resistant valve, the valve housing of which can be manufactured from plastic.

According to a first aspect of the invention, the valve comprises a valve housing with an inlet and an outlet and a closing body which is reciprocally movable in the valve housing between a closing position and an open position. The valve housing is provided with a passage with a bottom between the inlet and the outlet and with an upper chamber into which the closing body is movable in the open position. The closing body has a first and a second surface intended for the purpose of sealing respectively the inlet and the outlet in the closing position. The closing body has a first end and a second end and comprises between the first end and the second end a conical or pyramidal peripheral wall, the circumference of which decreases in the direction of the second end. At the second end the peripheral wall connects to an end wall. The first and the second surface are located on the peripheral wall and the end wall. The peripheral wall and the end wall are provided with a sealing layer such that in the closing position the sealing layer on the peripheral wall seals an opening between the passage and the upper chamber and the sealing layer at the end wall seals against the bottom.

By providing a sealing layer on the end part and by sealing against the bottom of the valve housing between the inlet and the outlet a compact, pressure-resistant valve is obtained in which turbulences in a fluid flow between the inlet and the outlet can be limited and a good seal is obtained in the closing position.
Advantageous embodiments hereof are described in the dependent claims.

According to a second aspect of the invention, the valve comprises a valve housing with an inlet and an outlet and a closing body which is reciprocally movable in the valve housing between a closing position and an open position. The closing body has a first and a second surface intended for the purpose of sealing respectively the inlet and the outlet in the closing position. The closing body has a first end and a second end and comprises between the first end and the second end a conical or pyramidal peripheral wall with a circumference which decreases in the direction of the second end. The first and the second surface are located on the conical or pyramidal peripheral wall. The valve housing is provided between the inlet and the outlet with a cavity for receiving the second end of the closing body in the closing position, wherein the cavity is provided with an internal conical or pyramidal peripheral wall which is shaped and dimensioned so as to make contact in the closing position with the conical peripheral wall of the closing body.

By providing a closing body with a conical or pyramidal closing body with an end which can be received in a correspondingly shaped cavity, the inlet and outlet can be closed in proper manner in the closing position, wherein the sealing can take place over a sufficiently large contact surface area. Such a construction further results in a good pressure resistance, and the device can take a compact form.

The peripheral wall of the closing body is preferably conical and the diameter thereof decreases in the direction from the first to the second end. Such a closing body can be manufactured in simple manner and, because the closing takes place by sliding two conical walls against each other, a good seal can still be obtained when there are small variations in the dimensions or in the case of an imperfect alignment.

The closing body is preferably provided with a sealing layer on at least the first and second surface. The closing body is still more preferably provided with a sealing layer on the second end and on the conical peripheral wall. The sealing layer is preferably a vulcanized rubber layer.

According to a variant, the internal peripheral wall of the cavity in the valve housing can be provided with a sealing layer and/or O-rings can be provided in grooves of the closing body around the conical wall. According to yet another variant, the first and second surface of the closing body can be provided with respectively a first and a second sealing block.

The valve preferably further comprises a guide part for guiding the closing body in the valve housing between the closing position and the open position. The guide part is configured to move the closing body along the axis of the conical or pyramidal peripheral wall of the closing body. The valve housing preferably comprises an internal chamber with dimensions adapted to the dimensions of the closing body such that the first end is guided along the internal wall of the internal chamber.

In a possible embodiment the guide part is a rod provided with screw thread, which is mounted rotatably in sealing manner in an opening through a wall of the valve housing and which protrudes outward from the valve housing through this opening. An O-ring, a shaft seal or a ring seal can for instance be provided for this purpose around the part of the rod which is positioned in the opening. The closing body is provided with a chamber for receiving an end of the rod, and the chamber is provided with an internal screw thread which co-acts with the screw thread of the rod such that rotation of the rod can cause a movement from the open position to the closing position or vice versa. The end part of the rod protruding from the valve housing can in this way thus be rotated in order to open or close the valve.

The chamber in the closing body preferably lies adjacently of the first end of the closing body and the rod preferably protrudes into the chamber in the direction of the axis of the conical or pyramidal peripheral wall.

The valve housing is preferably manufactured from plastic, for instance polyethylene (PE), high density polyethylene (HDPE) or polyoxymethylene (POM). Reinforcing means such as glass can optionally be arranged in the plastic material. The components can for instance be manufactured by means of injection moulding, turning, milling, welding. The closing body can for instance be manufactured from a metal such as steel or aluminium.

According to another variant, the guide part is mounted on the closing body and the guide part has an axis extending in the axial direction of the conical or pyramidal peripheral wall. The guide part is preferably provided at an end with a threaded rod. The valve housing can then be provided with a rotatably mounted nut body which is configured to co-act with the threaded rod for the purpose of moving the closing body up and downward in the valve housing.

The valve housing preferably comprises an inlet part, an outlet part and a housing part for connecting the inlet to the outlet. The closing body is mounted movably between the open and the closed position. The inlet part and the outlet part typically have a substantially constant cross-section perpendicularly of the centre line thereof in order to obtain a smooth flow through the valve.

According to an advantageous embodiment, the outlet part and the inlet part have centre lines lying mutually in line and the conical or pyramidal peripheral wall has a centre line directed perpendicularly of the centre line of the inlet and outlet parts. It is however also possible for the inlet part and the outlet part to form a bend of for instance 45 or 90 degrees relative to each other. In such an embodiment the opening angle of the conical or pyramidal peripheral wall of the closing body will typically be greater than in the variant in which the inlet and outlet parts lie mutually in line.

The invention will be further elucidated on the basis of a number of by no means limitative exemplary embodiments of a valve with reference to the accompanying drawings, in which:
Figures 1A and 1B show cut-away schematic perspective views of a first embodiment of a valve in respectively the closing position and the open position;
Figure 2 shows a schematic perspective view of the closing body of the valve of figure 1A;
Figure 3 shows a schematic perspective view of a valve housing according to a second embodiment;
Figure 4A shows a cross-section of a third embodiment of a valve;
Figure 4B shows a schematic perspective view of the closing body of the valve of figure 4A;
Figure 5 shows a cross-section of a fourth embodiment of a valve;
Figures 6A and 6B illustrate respectively a front view and cross-section (closing body not in cross-section) of a fifth embodiment of a valve according to the invention in the open position; and
Figures 7A, 7B and 7C illustrate respectively a front view, a first cross-section (closing body not in cross-section) and a second cross-section (closing body in cross-section) of the fifth embodiment in the closed position.

The same reference numerals are used in the figures for the same components.

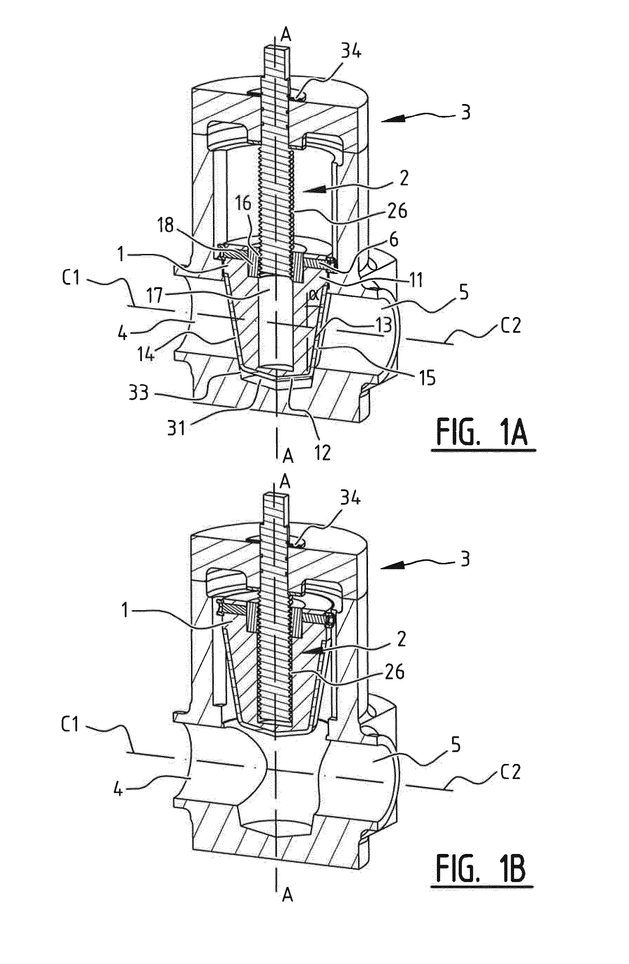

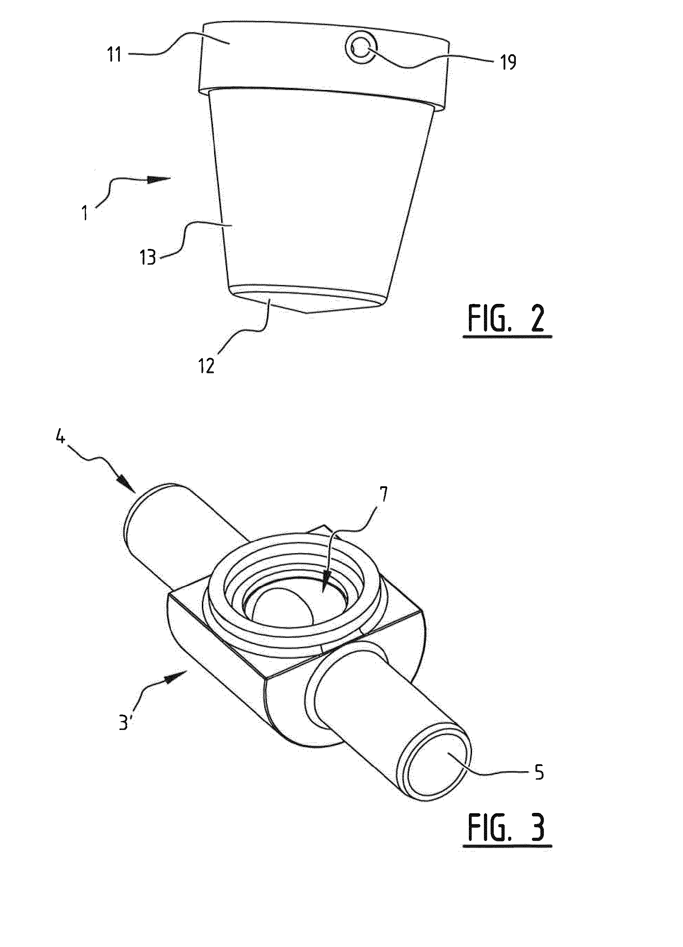

A first embodiment of a valve is illustrated in figures 1A, 1B and 2. The valve comprises a valve housing 3 with an inlet 4 and an outlet 5, and a closing body 1 which is reciprocally movable in valve housing 3 between a closing position (figure 1A) and an open position (figure 1B). The closing body has a first and a second surface 14, 15 intended for the purpose of sealing respectively inlet 4 and outlet 5 in the closing position. The closing body has a first end 11 and a second end 12, and between first end 11 and second end 12 the closing body has a substantially conical peripheral wall 13, the circumference and thus the diameter of which decrease in the direction of second end 12, see figure 2. The first and the second surface 14, 15 are located on the conical peripheral wall 13.

Valve housing 3 is provided between inlet 4 and outlet 5 with a cavity 31 for receiving second end 12 of closing body 1 in the closing position. Cavity 31 is provided with an internal conical peripheral wall 33 which is shaped and dimensioned so as to make contact with peripheral wall 13 of closing body 1 in the closing position. Lower end 12 of the closing body can in this way be moved into cavity 31 until a sufficient degree of sealing is achieved.

The closing body is provided on second end 12 and on conical peripheral wall 13 with a sealing layer which is typically a vulcanized rubber layer.

The valve further comprises a guide part 2 in the form of a rod 2 for guiding the closing body in the valve housing between the closing position and the open position, wherein the guide part is configured to move the closing body along a central axis A of conical peripheral wall 13. Rod 2 is provided with screw thread 26 and is mounted rotatably by means of two O-rings in an opening 34 in an upper wall of valve housing 3. A shaft seal or ring seal can also be used instead of one or more O-rings. Rod 2 protrudes outward from the valve housing through this opening. Closing body 1 is provided with a chamber 17 for receiving an end of rod 2. Chamber 17 lies adjacently of first end 11 of closing body 1 and rod 2 protrudes into chamber 17 along the axial direction A of conical peripheral wall 13. Provided in chamber 17 is a nut body 18 with an internal screw thread 16 which co-acts with screw thread 26 of rod 2 such that rotation of rod 2 can cause a movement from the open position to the closing position, or vice versa. The outward protruding part of rod 2 can more particularly be rotated for the purpose of moving closing body 1 from the closing position to the open position.

Valve housing 3 is preferably manufactured from plastic, for instance from PE, HDPE or POM. Closing body 1 is preferably manufactured from metal, for instance aluminium or stainless steel.

Inlet 4 and outlet 5 have centre lines C1, C2 which lie mutually in line, and conical peripheral wall 13 has a centre line A directed perpendicularly of the centre line C1, C2 of inlet 4 and outlet 5. Inlet 4 and outlet 5 have a substantially constant cross-section as seen in a cross-section perpendicularly of the centre line C1, C2 of inlet 4 and outlet 5. Conical peripheral wall 13 forms an angle α with a central axis A of conical peripheral wall 13, this angle α preferably lying between 2 and 45 degrees.

Figure 3 illustrates a second embodiment of a lower part 3' of a valve housing according to the invention. This lower part here has a cylindrical outer wall and can be manufactured on the basis of a cylindrical plastic part in which are arranged a passage for inlet 4 and outlet 5 and a chamber 7 for closing body 1. As in the variant of figures 1A and 1B, chamber 7 can be dimensioned so as to connect to closing body 1, wherein a conical peripheral wall (not visible in figure 3, but similar to wall 33 in figures 1A and 1B) is provided particularly in the lower cavity of chamber 7.

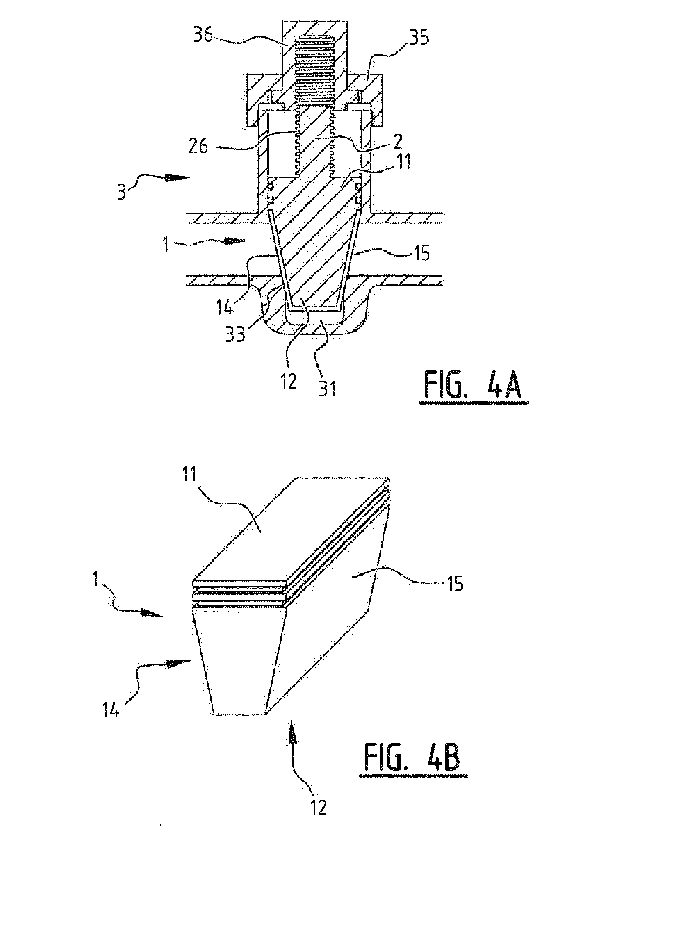

Figure 4A illustrates a third embodiment of a valve according to the invention in the closing position. The valve comprises a valve housing 3 with an inlet 4 and an outlet 5, and a closing body 1 which is reciprocally movable in valve housing 3 between a closing position and an open position. The closing body has a first and a second surface 14, 15 intended for the purpose of sealing respectively inlet 4 and outlet 5 in the closing position. Closing body 1 has a first end 11 and a second end 12 and between first end 11 and second end 12 closing body 1 has a substantially pyramidal peripheral wall 13, the circumference, and thus the length and width dimensions of which decrease in the direction of second end 12, see also figure 4B in which only closing body 1 is shown. The first and second surfaces 14, 15 are located on the pyramidal peripheral wall 13. Valve housing 3 is provided between inlet 4 and outlet 5 with a cavity 31 for receiving second end 12 of closing body 1 in the closing position. Cavity 31 is provided with an internal conical peripheral wall 33 which is shaped and dimensioned so as to make contact in the closing position with the pyramidal peripheral wall 13 of closing body 1. Lower end 12 of the closing body can in this way be moved into cavity 31 until a sufficient degree of sealing is achieved.

Closing body 1 is provided at its first end 11 with a threaded rod 2 which functions as guide part. Provided on an upper end of valve housing 3 is a nut body 36 which is mounted rotatably on valve housing 3 using a fastening ring 35. Nut body 36 is provided with an internal screw thread which is configured to co-act with screw thread 26 of threaded rod 2 for the purpose of moving closing body 1 up and downward in valve housing 3. Nut body 36 is preferably closed at the top in order to avoid dirt entering valve housing 3.

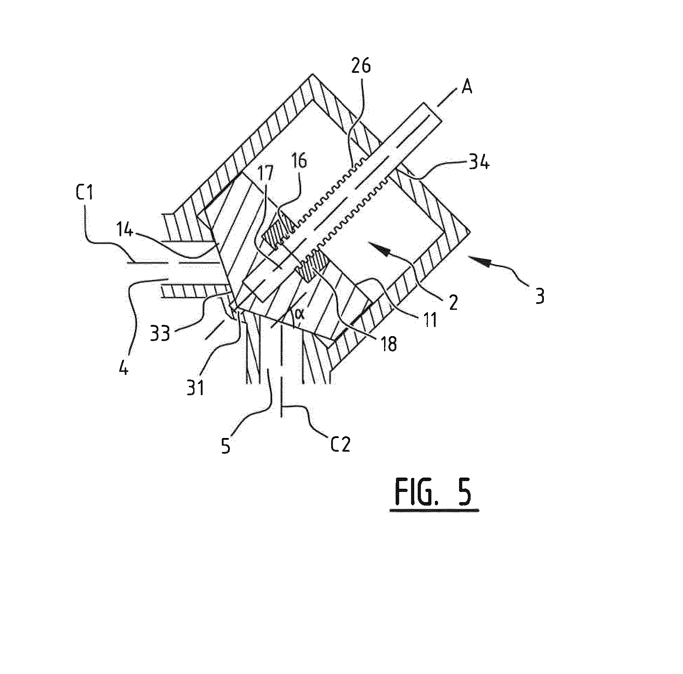

Figure 5 illustrates a fourth embodiment of a valve according to the invention in the closing position. The valve is largely similar to the valve of figure 1A and comprises a valve housing 3 with an inlet 4 and an outlet 5, and a closing body 1 which is reciprocally movable in valve housing 3 between a closing position and an open position. The closing body has a first and a second surface 14, 15 intended for the purpose of sealing respectively inlet 4 and outlet 5 in the closing position. Closing body 1 has a first end 11 and a second end 12 and between first end 11 and second end 12 closing body 1 has a substantially conical peripheral wall, the circumference of which decreases in the direction of second end 12. The first and the second surface 14, 15 are located on the conical peripheral wall. Valve housing 3 is provided between inlet 4 and outlet 5 with a cavity 31 for receiving second end 12 of closing body 1 in the closing position. Cavity 31 is provided with an internal conical peripheral wall 33 which is shaped and dimensioned so as to make contact with the conical peripheral wall of closing body 1 in the closing position. Lower end 12 of closing body 1 can in this way be moved into cavity 31 until a sufficient degree of sealing is achieved.

A difference from the first embodiment is that the centre lines C1, C2 of inlet 4 and outlet 5 form a mutual angle of about 90 degrees. In such an embodiment the angle α which the conical peripheral wall 14, 15 makes with axis A of closing body 1 will typically be greater than in the variant in which the inlet and outlet parts lie mutually in line.

The construction of the valve according to the invention has the advantage that it is compact, and can also provide for a rapid closure and guarantee a high measure of sealing at high fluid pressures. The valve is particularly suitable for connecting two gas conduits.

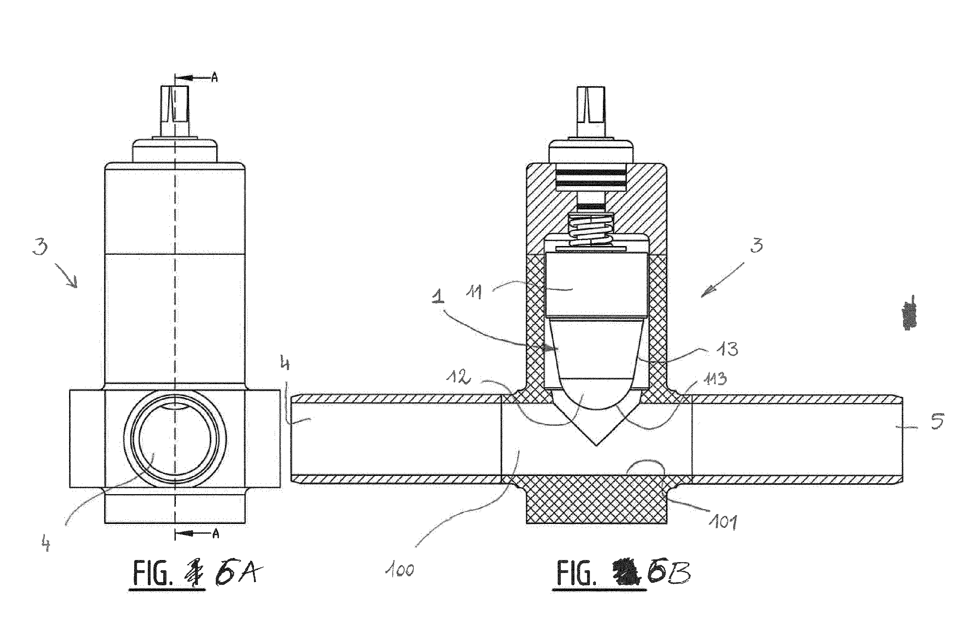

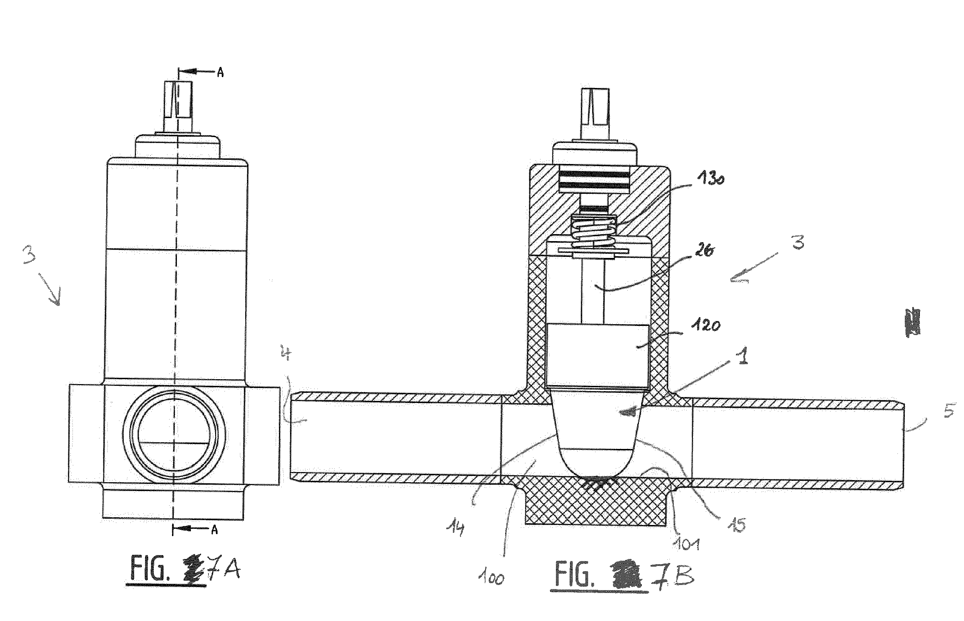

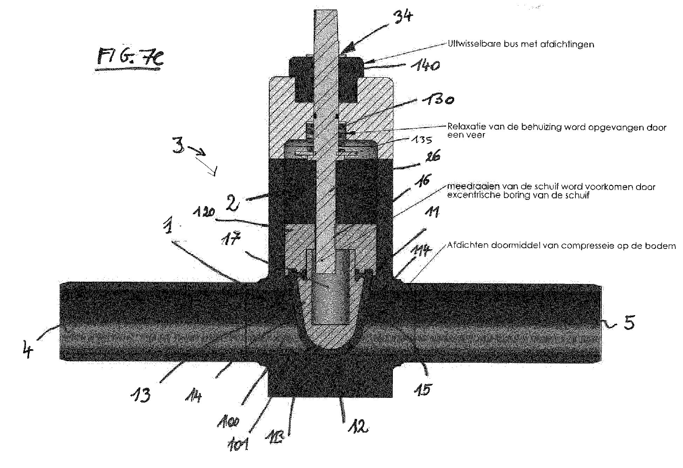

A fifth embodiment of a valve is shown in the open position in figures 6A and 6B and in the closed position in figures 7A, 7B and 7C. The valve comprises a valve housing 3 with an inlet 4 and an outlet 5, and a closing body 1 which is reciprocally movable in valve housing 3 between a closing position (figures 7A, 7B and 7C) and an open position (figures 6A and 6B). Valve housing 3 comprises an upper chamber in which closing body 1 is movable in the closing position and a passage 100 with a bottom 101. Bottom 101 extends in line with inlet 4 and outlet 5. The closing body has a first and second surface 14, 15 (see figure 7B) which is intended for the purpose of sealing respectively inlet 4 and outlet 5 in the closing position.

Closing body 1 has a first end 11 and a second end 12 and between first end 11 and second end 12 a substantially conical peripheral wall 13, the circumference of which decreases in the direction of second end 12. At second end 12 the peripheral wall 13 connects to an end wall 113. The end wall is preferably rounded, and still more preferably spherical. The spherical end wall 113 is pressed against the bottom 101 of passage 100. The conical form of peripheral wall 13 guarantees the seal on the sides of passage 100. In the closed position the upper side of passage 100 is also closed, preferably at the position of an upper end of conical peripheral wall 13, see figure 6B. The radius of curvature of the spherical end wall 113 is preferably the same as the radius of curvature of the cylindrical bottom of passage 100.
The sealing against bottom 101 takes place by compression of a sealing layer 114 (figure 7C) which is pressed against the bottom. Sealing layer 114 is provided along the whole end wall 113 and the whole peripheral wall 13. Sealing layer 114 is formed as an integral sleeve arranged on closing body 1. The sealing at first end 11 and against the side walls of passage 100 can take place in the same way as described above for the other variants of the invention, and will therefore not be further elucidated here.

The valve of figures 6A, 6B, 7A, 7B and 7C further comprises a guide part 2 in the form of a shaft part 2 with a screw thread 26. Shaft part 2 is mounted rotatably in an opening 34 in the wall of valve housing 3 and protrudes outward through this opening 34. Closing body 1 is further provided with a chamber 17 for receiving an end of shaft part 2. Closing body 1 is further provided with a guiding slide 120 which is mounted movably in the upper chamber of valve housing 3. Guiding slide 120 is provided with a threaded bore 16 which co-acts with screw thread 26 of shaft part 2 such that rotation of shaft part 2 can cause a movement from the open position to the closing position, or vice versa.

The valve further comprises a spring 130 which acts between the valve housing and closing body 1. In the illustrated variant spring 130 is mounted between the valve housing and a flange 135 provided on shaft part 2. A possible deformation or relaxation of the housing can in this way be compensated by means of spring 130 which holds guiding slide 120 in its place in the closing position. Shaft part 2 is further preferably arranged eccentrically relative to the axis of closing body 1. It is in this way possible in simple manner to avoid guiding slide 120 co-rotating during up or downward movement of closing body 1. For a proper mounting of shaft part 2 through opening 34 in valve housing 3 an exchangeable bushing 140 with sealing layers can be provided around shaft part 2.

The skilled person will appreciate that features of the different exemplary embodiments can be combined in random manner. The valve of figure 6 can thus be pyramidal instead of conical.

The skilled person will appreciate that the present invention is not limited to the above illustrated exemplary embodiments and that the scope of protection is defined solely by the following claims.

## Claims

1. Valve comprising a valve housing (3) with an inlet (4) and an outlet (5), and a closing body (1) which is reciprocally movable in the valve housing between a closing position and an open position; wherein the valve housing is provided with a passage (100) with a bottom (101) between the inlet and the outlet and with an upper chamber into which the closing body is movable in the open position; wherein the closing body has a first and a second surface (14, 15) intended for the purpose of sealing respectively the inlet (4) and the outlet (5) in the closing position, **characterized in that** the closing body has a first end (11) and a second end (12) and comprises between the first end and the second end a conical or pyramidal peripheral wall (13), the circumference of which decreases in the direction of the second end, wherein at the second end the peripheral wall (13) connects to an end wall (113), wherein the first and the second surface (14, 15) are located on the peripheral wall (13) and the end wall (113), and that the peripheral wall (13) and the end wall (113) are provided with a sealing layer such that in the closing position the sealing layer on the peripheral wall seals an opening between the passage and the upper chamber and the sealing layer at the end wall seals against the bottom.

2. Valve as claimed in claim 1, **characterized in that** the bottom extends substantially in line with the inlet and outlet.

3. Valve as claimed in either of the foregoing claims, **characterized in that** the end wall is rounded.

4. Valve as claimed in any of the foregoing claims, **characterized in that** the end wall is spherical.

5. Valve as claimed in any of the foregoing claims, **characterized in that** the sealing layer is one integral sealing sleeve extending over the whole peripheral wall (13) and end wall (113).

6. Valve as claimed in any of the foregoing claims, **characterized in that** the peripheral wall of the closing body is conical and that the diameter of the conical peripheral wall decreases in the direction from the first to the second end.

7. Valve as claimed in any of the foregoing claims, **characterized in that** the sealing layer is a vulcanized rubber layer.

8. Valve as claimed in any of the foregoing claims, **characterized in that** the sealing layer has a thickness of between 1 and 15 mm and preferably between 4 mm and 10 mm; and/or that in the closing position the sealing layer is compressed at least 5% and preferably at least 15% at the lower end of the end wall.

9. Valve as claimed in any of the foregoing claims, further comprising a guide part (2) for guiding the closing body in the valve housing between the closing position and the open position, wherein the guide part is configured to move the closing body along a central axis (A) of the closing body.

10. Valve as claimed in claim 9, **characterized in that** the guide part is a shaft part arranged eccentrically relative to the central axis of the closing body.

11. Valve as claimed in claim 9 or 10, **characterized in that** the guide part (2) comprises a rod provided with screw thread (26), which rod is mounted rotatably in an opening (34) in the wall of the valve housing (3) and protrudes outward from the valve housing through this opening, and that the closing body (1) is provided with a chamber (17) for receiving an end of the rod, and with an internal screw thread (16) which co-acts with the screw thread of the rod such that rotation of the rod can cause a movement from the open position to the closing position, or vice versa.

12. Valve as claimed in claim 11, **characterized in that** the chamber (17) lies adjacently of the first end of the closing body and that the rod (2) protrudes into the chamber in the axial direction of the conical peripheral wall.

13. Valve as claimed in claim 11 or 12, **characterized in that** the closing body is provided close to the first end with a guiding slide (120) which is mounted for up and downward movement in the upper chamber of the valve housing (3), and that the internal screw thread (16) is provided in the guiding slide (120).

14. Valve as claimed in any of the foregoing claims, **characterized in that a** spring means (130) is provided which acts between the closing body (1) and the valve housing (3).

15. Valve as claimed in any of the foregoing claims, **characterized in that** the inlet and the outlet have centre lines lying mutually in line and that the conical or pyramidal peripheral wall has a centre line directed perpendicularly of the centre line of the inlet and outlet parts.
